# EUROPEAN PATENT APPLICATION

(11) **EP 4 783 026 A1**
(43) Date of publication of application: **29.07.2026**
(21) Application number: 25153962.3
(22) Date of filing: 24.01.2025
(51) Int. Cl.: G06F 16/29, G01C 21/00

(54) **EXTENDED MAP TILE DATA STRUCTURES**

(71) Applicant: TomTom Navigation B.V., 1011 AC Amsterdam (NL)
(72) Inventor: BUKOWIECKI, Sebastian, 1011 AC Amsterdam (NL)
(74) Representative: Dehns

(57) **Abstract**

Disclosed is a novel "map chunking" approach in data for a digital map is stored and managed as a set of "map chunks", wherein each map chunk contains data for generating a plurality of different map tiles at different zoom levels (levels of detail). When a particular map tile is required at a certain zoom level, therefore, rather than obtaining the map tile directly, the corresponding map chunk containing data for generating that map tile is obtained, and the map tile is then generated from the map chunk.

## Description

### TECHNICAL FIELD

The technology described herein relates generally to techniques for managing digital map data, and in particular to methods and systems for facilitating the transfer of relevant and up-to-date digital map data to map-based client applications that are executing on an end user's device, such as a smartphone, tablet, or a car's on-board navigation system, etc., and that will use the digital map data, e.g. to produce a display.

### BACKGROUND

Digital maps are used in various map-based applications. For instance, navigation guidance may be provided with reference to a digital map representation of the geographic area that is being navigated. When executing such applications, it is often desirable for the device that is executing the application to be able to produce a display of parts of the digital map in the vicinity of the area that is being navigated.

To facilitate this, the digital map representation of the geographic area can be subdivided into so-called "map tiles", wherein each map tile essentially represents a section of the digital map at a certain zoom level. For example, this may be done for visualisation purposes, in which case the world may be divided into square map tiles corresponding to images of respective parts of the digital map. The number of zoom levels can vary, as desired, but in typical visualisation schemes, at the lowest zoom level (level 0), the entire world fits on a single tile. Each subsequent zoom level then subdivides the tiles in the previous zoom level into quadrants, such that, at higher zoom levels, the map is subdivided into increasingly smaller sections, with each tile providing more detailed information about a specific area. Thus, if the world is divided across 23 zoom levels, the world will be divided into a grid of 2^22 by 2"22 map tiles at the highest zoom level (level 22), each map tile therefore representing a relatively small geographic area. In that case, for driving applications, a zoom level range of 14 to 18 is typically used for displaying the digital map, with higher zoom levels within that range being used for displaying parts of the digital map that are closer to the user, and lower zoom levels within that range used for displaying parts of the digital map that are further from the user, i.e. towards the display horizon.

There are various other examples of how a digital map representation of the world (or in general, a given geographic area) may be subdivided into map tiles. For example, there may be a first set of map tiles that is available for visualising the geographic area encompassed by the digital map, as discussed above, and these map tiles may therefore contain (image) data representing the objects and features, e.g. defining the road network geometry, within their respective sections of the digital map. These can thus be used by developers to create various map-based applications. In this regard, it may also be desired for developers to incorporate real-time traffic data. Another set of map tiles may therefore be provided to facilitate this with these map tiles containing (image) data representing current traffic conditions within their respective sections of the digital map, e.g. to produce displays of traffic incidents. Further, these different types of map tiles may be overlaid to produce a compound display.

To improve user experience, it may be beneficial for the digital map data to be updated regularly, e.g. to take into account changes to the underlying road network, and/or to reflect current traffic conditions.

Digital map data that is consumed by map-based applications is thus typically downloaded from the storage in which it resides to end-user devices executing such map-based applications, e.g., via a server system. Typically the various map tiles may be accessed via a corresponding application programming interface (API), and the map tiles are thus API-defined constructs. An application that requires digital map data may thus issue suitable API requests for one or more map tiles, with the API requests specifying the particular map tiles that are required. This could be done "on the fly", with the application requesting map tiles as and when they are needed, or via a suitable map prefetching mechanism that downloads digital map data for offline usage. Additionally, map tiles can be cached locally on the device, allowing for faster rendering and reduced data usage when navigating through frequently visited areas. Various arrangements are possible in this regard.

The use of map tiles enables navigation devices to load and display only the relevant portions of the map, reducing the amount of data that needs to be processed. This may be particularly beneficial for mobile devices with limited processing power.

The concept of map tiling therefore allows for efficient and scalable rendering of maps, ensuring that devices can display detailed maps without overwhelming the device's processing capabilities.

### SUMMARY

According to a first aspect, there is provided a method of operating a server system, wherein the server system manages data for a digital map, and includes a server that is operable to provide such data for the digital map to one or more client applications,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the geographic area encompassed by the digital map containing different levels of detail, and
wherein there is stored, in respective storage associated with or accessible by the server, a set of map "chunks", each map chunk corresponding to a respective portion of the digital map, and each map chunk containing data for generating a plurality of different map tiles at multiple, different zoom levels within its corresponding portion of the digital map.

According to a second aspect, there is provided a server system that manages data for a digital map, and includes a server that is operable to provide such data for the digital map to one or more client applications,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the geographic area encompassed by the digital map containing different levels of detail, and
wherein there is stored, in respective storage that is associated with or accessible by the server, a set of map "chunks", each map chunk corresponding to a respective portion of the digital map, and each map chunk containing data for generating a plurality of different map tiles at multiple, different zoom levels within its corresponding portion of the digital map.

The technology described herein relates to digital maps and in particular relates to a novel map "chunking" arrangement, as will be described further below.

In particular, in embodiments, the method according to the first aspect comprises: when data for a map tile at a particular zoom level that is contained within a respective map chunk is to be provided to a client application: obtaining the respective map chunk containing the data for generating the requested map tile; and using the obtained map chunk to provide data for the requested map tile to the client application.

Correspondingly, according to the second aspect, when data for a map tile at a particular zoom level that is contained within a respective map chunk is to be provided to a client application, the respective map chunk containing the data for generating the requested map tile may be obtained and used to provide data for the requested map tile to the client application.

In this respect, it will be appreciated that a digital map is a digital representation of a certain geographic area and will therefore include data for representing various objects and features that are considered relevant, such as roads, junctions, points of interest, etc., within the geographic area encompassed by the digital map.

According to embodiments, the digital map encompassing the geographic area is subdivided into a plurality of so-called "map tiles", with each map tile corresponding to a respective section of the overall geographic area encompassed by the digital map.

The subdivision of the digital map into the map tiles can be, and preferably is, done for visualisation purposes, e.g., such that each map tile contains image data for producing a display of its respective section of the digital map. In that case, a map tile may essentially correspond to an image of a certain section of the digital map. In preferred embodiments, the map tiles are vector images, and may thus contain an array of features containing a representation of geometry that is to be rendered. However, other arrangements would in principle be possible, and in general the map tiles may have any suitable format and may contain any suitable image or non-image data, depending on for what purpose the digital map is being used. For example, if the digital map is to be used for navigation/route-planning purposes, the map tiles may contain data in a suitable format for use by the navigation/route-planning system.

In particular, the subdivision of the digital map into the map tiles is performed so as to provide a hierarchy of map tiles in which different levels of the hierarchy represent different zoom levels.

For instance, and in preferred embodiments, at a lowest zoom level, there is a single map tile encompassing the entire geographic area represented by the digital map. At subsequent zoom levels, the map tiles in the preceding zoom level are then subdivided into smaller area map tiles, and so on, so as to create the hierarchy of map tiles. This is preferably done by subdividing the map tiles at each zoom level into respective quadrants, but other suitable arrangements for tiling the digital map representation of the geographic area would of course be possible.

Thus, at any given zoom level, the digital map is preferably subdivided into a set of regular map tiles, with each map tile at the same zoom level corresponding to a different respective section of the overall digital map (i.e. a respective subarea of the geographic area encompassed by the digital map). Preferably, each of the map tiles within a same, given zoom level are self-sufficient in that a given map tile contains all of the data necessary to visualise the respective section of the overall digital map to which the map tile corresponds. The map tiles within a same, given zoom level could be strictly non-overlapping but in preferred embodiments the map tiles within a same, given zoom level contain overlapping margins to facilitate correct representation of features that extend across map tiles edges. That is, the map tiles at a given zoom level may overlap at the margins but otherwise preferably each correspond to a unique portion of the overall geographic area encompassed by the digital map. The totality of map tiles at a given zoom level preferably together cover the entire geographic area encompassed by the digital map, but this is not essential and it may be the case that the map tiles at a given zoom level only cover part of the overall geographic area encompassed by the digital map. Various arrangements would be possible in this regard.

Accordingly, the map tiles within a same, given zoom level preferably correspond to a same-sized section of the digital map, and the map tiles preferably have the same shape (they are typically rectangles, e.g. squares, although this is not strictly necessary), but each map tile within a same, given zoom level corresponds to a respective different, preferably unique, section of the digital map (i.e. a different portion of the geographic area represented by the digital map). The map tiles at a same, given zoom level thus preferably contain the same level of detail. On the other hand, map tiles of different levels of hierarchy (e.g., at different zoom levels) will correspond to different-sized sections of the digital map and will contain different levels of detail.

The map tiles may be, and preferably are, accessed via suitable application programming interface (API). Thus, a client application that requires one or more map tiles may be, and preferably is, operable to issue suitable API request/s to a server that provides a respective interface to the storage on which data for the digital map resides. The API request/s may for example specify the particular map tile or map tiles that are required, e.g. with each map tile being uniquely specified in terms of its zoom level (or, equivalently, a {z} coordinate for the map tile) and {x,y} coordinates corresponding to the map tile's position on the grid for that zoom level, and these API request/s will trigger appropriate processing to obtain the requested map tile(s).

The server system according to the first and second aspects above thus includes at least one server that is operable to provide such data for the digital map to client applications, which server thus provides a respective interface to the digital map data for one or more client applications. The client application(s) can thus issue API requests in respect of map tiles to the server that provides the respective interface to the storage on which data for the digital map resides. Typically, a given server system may include multiple servers, each providing a respective interface to the storage on which data for the digital map resides. Various arrangements would be possible in this regard.

The data for the digital map is thus stored on respective storage that is associated with or accessible by such server(s). It will be appreciated that this storage could reside at least in part within the server(s) that provide the client application interfaces. However, given the amount of storage space that is required for the bulk digital map data, it is not normally efficient to store all of the data for the digital map on these server(s).

Typically, therefore, this storage is provided separately to the server(s), but is accessible thereby so that relevant data for the digital map can be downloaded from the storage to the server(s), as required. The server system recited in the first and second aspects above may thus comprise at least one server in combination with such storage that is accessible by the at least one server. Preferably, this storage is shared storage that is associated with or accessible by multiple server applications, so that the server system may include multiple different servers that can each access the same digital map data. This then allows the server applications to be relatively smaller, as the bulk digital map data can be stored outside of the servers that provide the client application interfaces, and can also increase resilience of the system. For example, a given server can start up and download only the essential data needed to operate. This can also facilitate releasing quicker updates of the digital map data, as will be explained further below.

According to embodiments, rather than the system attempting to store and process individual map tiles, or more likely attempting to store the bulk digital map and then produce individual map tiles on-demand, the system is operable and configured to store, in the respective storage that is associated with or accessible by the server(s) (e.g. the shared storage discussed above) a set of map "chunks", with each map chunk corresponding to a respective portion of the digital map, and containing data for generating a plurality of different map tiles at multiple, different zoom levels within its corresponding portion of the digital map. Thus, in embodiments, the method comprises (and the storage is configured for) the step of storing the set of map chunks in the storage.

It will be appreciated in this respect that the number of map tiles that may be requested by a given client application in use can be substantial. It will also be appreciated that the requested map tiles may typically contain lots of redundant or overlapping information, in particular when map tiles are needed that represent portions of the same geographic area but at different zoom levels, as these map tiles may then contain data for the same map objects and features but at varying levels of detail. For instance, when displaying part of a map for navigation purposes, it is often desired to display map tiles at different levels of detail depending on how close the area represented by the map tiles is to the user (e.g., the driving vehicle). Thus, as a user moves through a network, a particular geographic area may initially be displayed at a first, lower level of detail, and as the user moves closer towards that geographic area, the same geographic area may be displayed at a second, higher level of detail. It may therefore be required to obtain many map tiles within the same geographic area at different levels of detail. This may particularly be the case when the digital map is being downloaded via a prefetching mechanism, e.g. for offline use, as in that case map tiles at various zoom levels within the geographic area may need to be downloaded in advance.

Transferring all of the relevant map tiles individually may therefore involve significant bandwidth cost, and also significant API cost, as the client application may need to issue a larger number of API requests to ensure all of the required map tiles are obtained (and the server must accordingly be able to efficiently handle such larger number of API requests).

In contrast, according to embodiments, a single map "chunk" can potentially be provided that contains data for generating a plurality of different map tiles at multiple, different zoom levels within its corresponding portion of the digital map. The map chunk thus contains the relevant data that is needed to generate a plurality of different map tiles within its corresponding portion of the digital map. Although a map chunk may therefore be a larger data structure than a single map tile, the map chunk can be used to generate multiple map tiles, and a single map chunk should, and preferably does, have a significantly smaller data size than the total size of the data structures for all of the map tiles at the different levels of details that can be generated from the map chunk. Thus, in general, the number of map chunks that will need to be transferred to cover a particular geographic area should be, and typically will be, fewer than the number of map tiles that would be requested, such that the overall amount of data to be transferred can be (and preferably is) reduced, at least for typical map-based applications.

The map chunking approach for storing digital map data described herein can therefore provide various benefits in this regard.

For instance, the server that is providing the client application's interface to the data for the digital map could in some cases still return individual map tiles to the client application in response to a request for a map tile (and this may have to be done, e.g., if the client application is not able to process map chunks). That is, in response to the server receiving from a client application a request for a map tile at a particular zoom level for which data is contained within a respective map chunk, this request may be serviced by the server obtaining the respective map chunk containing the data for generating the map tile, the server generating the requested map tile at the particular zoom level from the map chunk containing the data for the requested map tile, and the server then returning the generated map tile to the client application. Even in this case, the use of map chunks may still provide improvements, e.g. with regard to the updating of the digital map data, as will be discussed further below.

Thus, the server may be configured by default to return individual map tiles. However, at least for certain APIs that support the use of map chunks, the server is preferably also operable to return map chunks. Whether the server returns an individual map tile or a map chunk may then be specified, for example, in the API request. For example, when a map chunk is to be returned, a corresponding parameter or flag associated with the API request may be set accordingly that causes the server to respond to the API request with a map chunk (i.e. rather than an individual map tile). This could be selectively configurable, e.g. by the application programmer. Preferably, however, this is invisible to the application programmer. For instance, a software development kit may be provided that is able to identify which APIs support the use of map chunks, and to automatically configure on that basis whether an individual map tile or a map chunk should be returned in response to a particular API request, and the corresponding parameter or flag may then be set accordingly to cause the server to respond either with individual map tiles or map chunks, as appropriate. Various arrangements would be possible in this regard.

In some preferred embodiments, therefore, in response to a request for a map tile, the server is operable and configured to return to the client application the relevant map chunk containing the data for generating that map tile. That is, in preferred embodiments, in response to the server receiving from a client application a request for a map tile at a particular zoom level at a particular zoom level for which data is contained within a respective map chunk, the request is serviced by the server obtaining the respective map chunk containing the data for generating the map tile and then returning the map chunk containing the data for the requested map tile to the client application. In that case, the client application can then process the map chunk to generate the requested map tile at the particular zoom level that is desired. This can then provide significant improvements in terms of reducing data consumption, and API costs, associated with transferring the digital map data to the client application. Thus, the map tiles are an API construct, but according to the present invention the API-defined map tiles are accessed and managed as respective map chunks.

An effect and benefit of using map chunks therefore is that when a set of map tiles is required in which many of the map tiles contain overlapping data, rather than the server having to obtain and return each of the requested map tiles individually, a suitable (smaller) set of map chunks containing the relevant data can be obtained, with each map chunk enabling multiple different map tiles to then be generated.

This can then reduce the amount of duplicated information within the data for the digital map that has to be transferred via the server(s) to the client application that will use that data. For instance, it will be appreciated that the multiple different map tiles that can be generated from a particular map chunk will generally cover parts of the same geographic area but at different zoom levels (levels of detail), and so a lot of the information contained in those map tiles will essentially be duplicated. Transferring a single map chunk that contains the data required for generated those multiple map tiles will therefore reduce the amount of duplicated information that needs to be transferred. In this way, by reducing the amount of duplicated information that needs to be transferred, the transfer of digital map data to the client application may thus be improved, e.g. made more efficient.

The use of map chunks can also then improve caching performance. For instance, in preferred embodiments, as mentioned above, the data for the digital map resides in storage, which is preferably separate to the server that provides the client application's interface to the data for the digital map. Thus, when data for the digital map is to be provided to a client application via the server, the server may first need to fetch the relevant map chunks from the external storage. To reduce latency and/or bandwidth, at least some map chunks may therefore be, and preferably, are cached in a suitable cache system that sits logically between the storage in which the map chunks are stored and the end client applications that will use the data.

For example, the cache system may be implemented at least in part on the device on which the client application is executing, and/or at least in part on the server via which the data is transferred. Various arrangements would be possible in this regard.

Thus, rather than the server always having to fetch map chunks from the external storage, if the required data is already present in the cache system, the data can be obtained directly from the cache system.

Thus, a request for a first map tile may cause a corresponding map chunk including the data for that first map tile to be fetched from the storage into the cache system. When a subsequent request is issued for a second, different map tile, if the map chunk that is present in the cache system also contains the data for generating the second map tile, the second map tile can then be generated accordingly from the same map chunk, e.g., and preferably, without therefore having to pass the request to the storage.

It will be appreciated that the map chunking approach described above may be particularly beneficial in this context, as a single map chunk may allow multiple, different map tiles to be generated. For instance, it is often the case that a map tile may be requested at a first (e.g. lower) zoom level, but that it also desired to obtain map tiles from another (e.g. higher) zoom level, e.g. so that the same region can be displayed at different levels of detail. The use of map chunks allows this to be done very efficiently, with increased cache performance (e.g. hit rate), as it will often be the case that once a map chunk has been fetched into the cache system, multiple requests for map tiles will use the data contained within that same map chunk, whereas more traditional map tiling approaches may require many map tiles to be requested that effectively contain duplicated information.

Thus, to process a request for a given map tile at a particular zoom level for which data is contained within a respective map chunk, the respective map chunk containing the data for generating the map tile will generally need to be obtained. Rather than always having to obtain the map chunk from its location in the storage, however, these requests are preferably processed using the cache system, such that if the map chunk is already available within the cache system, the map chunk is obtained from the cache system, and the map chunk is therefore only fetched from storage when it is necessary to do so. Once the relevant map chunk has been obtained, the map chunk is then used to provide the client application with data for the requested map tile. As discussed above, the processing of the map chunk to produce the map tile may be performed either by the server (with the server then providing the map tile to the client application), or by the client application itself.

In this respect it will be appreciated that in typical use cases it may often be the case that multiple different map tiles within a similar geographic region will be requested in close succession, or as part of a prefetching mechanism. In such cases, there may be lots of duplicated information included in the map tiles that are requested and in these typical use cases the use of map chunks can significantly reduce data consumption/bandwidth, both by reducing the amount of duplicate information that needs to be transferred in the first place, and also by improving caching performance.

Alternatively, or additionally, the use of map chunks may facilitate providing users with 'fresher' digital map data. That is, by making the transfer of digital map data more efficient, it may then be possible to provide digital map data more frequently, and this is preferably also the case in embodiments, as will be discussed further below.

It will be appreciated that embodiments will also therefore result in improved client-side operations. For example, as discussed above, the use of map chunks in this way may reduce the number of API requests that the client application needs to issue to the server, and/or improve caching performance on the device on which the client application is executing.

Thus, according to a further aspect, there is provided a method of providing digital map data to a client application,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the digital map containing different levels of detail,
the method comprising:
   requesting, by the client application, data for a respective map tile at a particular zoom level;
   obtaining, in response to the request, a respective map "chunk" that corresponds to a respective portion of the digital map containing the requested map tile, the obtained map chunk containing data for generating a plurality of different map tiles at multiple, different zoom levels including data for generating the requested map tile at the particular zoom level; and
   generating the requested map tile at the particular zoom level from the data contained within the obtained map chunk.

Thus, according to this further aspect, the client application requests data for a respective map tile at a particular zoom level, e.g. in the normal manner for accessing the map tiles. These requests can therefore be issued to the server that provides the client application interface to the storage on which the digital map data resides in order to trigger processing to obtain the requested map tile. In response to such requests, rather than directly obtaining the particular, individual map tile, a corresponding map chunk that contains the data for generating the requested map tile is first obtained. The requested map tile is then generated from the data contained within the obtained map chunk.

The requests by the client application for map tiles may be triggered and performed in any suitable and desired manner. For example, this could be done in an "on the fly" manner, with map tiles being requested, and map chunks downloaded, as needed, on-demand. However, the requests could also be performed via a suitable prefetching mechanism, as mentioned above. This then allows the client application to prefetch data for a set of relevant map tiles, e.g., and preferably, so that these can be downloaded in advance. This then allows the client application to switch to an "offline" mode without visible artefacts, at least for the particular part of the digital map that has been prefetched.

In this respect, it will be appreciated that downloading part of map in advance via such prefetching mechanism may generally need a larger number of map tiles to be requested covering all of the map tiles that may potentially be needed for the offline use, including many map tiles covering the same area but at different zoom levels. The requested map tiles in this case may therefore contain lots of duplicated information and the use of map chunks may be especially beneficial in this context.

Thus, whilst embodiments have been described above in relation to requesting a single map tile, it will be appreciated that the client application may, and typically will, request a larger number of map tiles. This could be done either by the client application issuing a number of sequential requests, or by the client application issuing a request for a group of multiple map tiles, e.g. depending on how the API is configured.

It will also be appreciated that the method according to this further aspect may, and preferably does, contain any features described above in relation to the first and second aspects, at least to the extent that they are not mutually incompatible.

For instance, in preferred embodiments, the obtained map chunk is returned to the client application, and the client application will process the map chunk to generate the requested map tile, as discussed above. Thus, in embodiments, the step of generating the requested map tile at the particular zoom level from the obtained map chunk is performed by the client application.

Embodiments also extend to this operation, such that according to another aspect, there is provided an electronic device that is operable to execute a client application that will use digital map data,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the digital map containing different levels of detail, and
wherein the client application is operable to request data for the digital map, and wherein, in response to a request issued by the client application for a respective map tile at a particular zoom level, the client application is configured to obtain a respective map "chunk" that corresponds to a respective portion of the digital map containing the requested map tile, the obtained map chunk containing data for generating a plurality of different map tiles at multiple, different zoom levels including data for generating the requested map tile at the particular zoom level,
the client application configured to generate the requested map tile at the particular zoom level from the data contained within the obtained map chunk.

In embodiments, the technology described herein also extends to a client and server system, including the server system as described above in combination with one or more client applications (and the devices on which they are executing).

In preferred embodiments, as alluded to above, a cache system is provided that is operable to store at least some map chunks closer to the client applications that will use the digital map data. Preferably, therefore, any requests for map tiles issued for a client application are processed by such cache system. The cache system may be implemented in various ways and there may be multiple levels of caching. For instance, the cache system may reside at any suitable logical location between the storage and the client application that will use the digital map data. Thus, the cache system may reside at least in part on the device on which the client application is executing. Alternatively, or additionally, the cache system may reside at least in part of the server that provides the interface to the server system for the client application(s). Preferably, there is a first cache provided on the device on which the client application is executing, and a second cache provided on the (and optionally each) server within the server system, and these caches are preferably used to store a subset of recently used map chunks. Various arrangements would however be possible in this regard.

In general, any suitable cache system may be provided in this regard. The cache system may thus be implemented either in software or hardware, as desired. It will be appreciated that the cache system will generally be smaller than the storage in which the map chunks are stored, so that only a subset of the map chunks can be stored within the cache system. In this respect, any suitable and desired cache replacement policy may be used for managing which map chunks are stored within the cache system.

The cache system is thus operable to store map chunks obtained from the server. Thus, when processing a request for a map tile, when the respective map chunk containing the data for the requested map tile is already present in the cache system (i.e. there is a cache hit) the map chunk may be, and preferably is, obtained from the cache system. Whereas, only when the respective map chunk containing the data for the requested map tile is not already present in the cache system (i.e. there is a cache miss), the cache system obtains the map chunk from its location in storage.

To facilitate this operation, the server that provides the interface to the server system for a client application is preferably operable and configured to maintain a set of map chunk "identifiers" for identifying a corresponding set of map chunks that are stored in the respective storage that is associated with or accessible by the server system, and that are currently validated/available for use by the client application.

The set of map chunk identifiers thus allows the server to index into the set of map chunks that are stored in the respective storage. The server is thus operable and configured to use the set of map chunk identifiers to identify respective map chunks, and preferably also to identify whether a required map chunk is already present in the cache system. The identified map chunk can then be obtained, either from the cache system, if available, or from the storage, if not, and processed accordingly.

Subject to the particular requirements of the technology described herein, the set of map chunk identifiers that is maintained by the server may generally take any suitable and desired form.

For example, in preferred embodiments, the map chunk identifiers correspond to respective checksums or hashes that are computed from the data contained within a given map chunk. Thus, the set of map chunk identifiers preferably corresponds to a set of checksums or hashes that are computed and arranged in such a way to allow the respective map chunks to be uniquely identified. The set of checksums or hashes is thus preferably stored in a suitable ordered manner, e.g. as a list, so that the respective checksum for a given map chunk (at a given position) can be readily identified from within the set. For instance, the list may contain a respective entry for each map chunk in a set of map chunks that can be accessed, with the entries indexed in such a manner that the respective entry for a given map chunk, which can be defined in terms of its respective {x, y} coordinates (and level(s), or {z} coordinate), can be identified within the list. Thus, when a given map chunk is required, the respective entry for that map chunk can be identified in the list, and then used to identify the (data, e.g. checksum, for the) map chunk in question. Various arrangements would be possible in this regard.

This also facilitates version control. For example, and preferably, the server maintains an up to date set of map chunk identifiers for identifying the latest versions of the map chunks that are available within the storage. Thus, if a particular map chunk is available in the cache system, the server can identify based on the relevant map chunk identifiers whether or not there is a newer version of that particular map chunk available in storage. If the version of the map chunk in the cache system corresponds to the latest version of the map chunk that is available within the storage, the map chunk can thus be provided directly from the cache system (and this is preferably done).

Thus, the map chunk identifiers are preferably usable to identify whether (or not) there is a newer version of a particular map chunk available at the server. The map chunk identifier may thus comprise a respective version identifier to do this, or the map chunk identifier may itself provide information in this regard. For example, when the map chunk identifier comprises a checksum or hash that is computed over the data contained with the map chunk, the value of the checksum or hash will reflect whether the data has been updated. Thus, if the values do not match, this indicates that a newer version of the map chunk may be available within the storage.

Various arrangements would be possible in this regard.

To further improve performance, the cache system is preferably also operable to store, at least for any map chunks that are stored (cached) locally to the device on which the client application is executing, a respective expiry time for the map chunks. When a request for a map chunk is received by the cache system and a version of the map chunk containing the data for the requested map tile is already present in the device-local cache, it is first checked whether the expiry time for the map chunk has been exceeded. If the expiry time for the map chunk has not yet been exceeded, the map chunk that is already present in the cache is preferably used, even if a newer version of the map chunk could potentially be available within the storage.

On the other hand, if the expiry time for the map chunk has been exceeded, the system preferably then checks whether a newer version of the map chunk is available via the server system.

Thus, in embodiments, when a map chunk is to be stored within a cache that resides locally to the device on which the client application is executing, there is also stored in association with the map chunk a respective expiry time for the map chunk.

The client application may be any suitable map-based application that requires the digital map data. In preferred embodiments, the client application produces a display of the digital map. Thus, in preferred embodiments, the digital map data is provided to the client application to render portions of the digital map for display. Preferably, therefore, the method further comprises (and the application is further configured for) rendering the generated map tile for display and providing the rendered map tile for output. Other arrangements and outputs would however be possible.

The use of map chunks can therefore provide various benefits in terms of reducing data consumption and/or the number of API requests that will be issued by client applications. This can then reduce the cost associated with managing the API requests on the server side. As briefly mentioned above, the use of map chunks may also however provide various other benefits on the server side, in particular in terms of facilitating updating the digital map. This can in turn facilitate providing more frequent updates to client applications, and hence improving the end user experience by providing fresher digital map data.

For example, because the map data processing system is configured to store a set of map chunks, as discussed above, this has the effect and benefit that when it is desired to update some or all of the digital map, this can be done in an incremental manner, i.e. by updating (only) the map chunk or map chunks that are affected by a particular map update.

Thus, in embodiments, when a map update to update part of the digital map is received, the method comprises (the storage):
determining which of the map chunk(s) in the set of map chunks stored within the storage correspond to the part of the digital map that is affected by the map update, to thereby determine which map chunk(s) need to be updated based on the map update; and
for any map chunk for which it is determined that the map chunk needs to be updated based on the map update, storing within the storage an updated map chunk including updated data based on the map update.

When a map update to update part of the digital map is received, some or all the data that is contained within the stored map chunk could be updated. Preferably, however, rather than updating the data contained within a map chunk, a new version of the map chunk is stored.

This is in contrast to other, more traditional approaches where the map tiles may, e.g., be produced on demand from the overall bulk digital map and so the system would have to store, and perform updates to, the bulk digital map as a whole. Thus, in such other approaches the overall digital map may be associated with a particular "version" identifier. This means, however, that it would not generally be possible to determine which map tiles were (or were not) affected by a particular map update, so that any map update would mean that any currently stored map tiles would potentially have to be invalidated (or there would be a risk that they are not up-to-date).

Given the frequency of map updates, this may then mean that map tiles would potentially have to be very frequently replaced, as it could not be guaranteed that they are valid. This may then mean attempting to cache individual map tiles would be ineffective, and may further increase data consumption/bandwidth.

To address this, therefore, any map tiles that were stored (cached) locally to the device on which the client application was executing were provided with an 'expiry time' that determines how frequently they should be updated (e.g. in a similar manner as described above for the map chunks). In particular, if the expiry time for a particular map tile that is stored in an associated map tile cache has expired, this indicates the map tile should be replaced with a new version of the map tile. In order to avoid the map tiles being replaced too frequently, in some traditional approaches this expiry time might then be set to a number of weeks. This means that whilst the digital map data is reasonably up-to-date, it often will not be. This also means that more dynamic digital map data, such as traffic content, could not easily be included in the map tiles, and so traffic data may have been transferred separately.

In preferred embodiments, therefore, version control can now be (and is) performed at the level of the map chunks (e.g. rather than for the overall digital map). This then means that if a map update does not affect a particular map chunk that is currently stored, any data for that map chunk can be considered valid. Thus, there is no need to invalidate a particular map chunk, either from its location in the storage within which the map chunks reside, or within the cache system, unless a new version of the specific map chunk in question is available to replace it.

Because map updates can be localised to particular map chunks, this also simplifies validating updates to map chunks, so that it may be possible to perform map updates more regularly (and to make these updates available to client applications more quickly).

For instance, as mentioned above, the server preferably maintains a set (e.g. a list) of map chunk identifiers for identifying a corresponding set of map chunks stored within the storage that are currently available for use. Once a map update has been processed, e.g. with any map chunks that need to be updated being updated, and new versions of those map chunks being stored appropriately, the server can thus be provided with an updated set of map chunk identifiers to reflect the map update.

Thus, when a map update to update part of the digital map is received that causes one or more updated map chunks to be stored within the storage, the method preferably comprises sending an updated set of map chunk identifiers to the server.

Further, this can be done very quickly. In this regard, it will be appreciated that the set of map chunk identifiers is effectively a snapshot of the current map chunks available within the storage. Thus, when a map update causes an update to some of the map chunks within the storage, this information can be obtained and transmitted to the server very quickly, so that the server has an updated set of map chunk identifiers very shortly after the map update is processed, and these can then be used as soon as they are available at the servers. In this regard, as mentioned above, the map chunk identifiers are preferably in the form of checksum or hashes that are calculated using some or all of the data within the respective map chunks, and these can be calculated and transmitted to the servers within a matter of seconds after the map update has completed. For example, in embodiments, the storage may maintain a corresponding master version of the list of map chunk identifiers, and once a map update has been processed by the storage, the master version of the list within the storage can be updated, with any entries (e.g. checksums or hashes) being updated accordingly. The updated master version of the list of map chunk identifiers can then be broadcast to any servers that are accessing the storage. In this way, the set of map chunk identifiers maintained by the server(s) can be updated and kept in sync with the master version on the storage, so that the server(s) have up to date knowledge of which map chunks are currently available within the storage. Further, this can be done quickly and cheaply, since it is only necessary to transmit the updated set (e.g. list) of identifiers to the server(s) at this point, e.g. rather than the underlying map data.

As mentioned above, storing an updated map chunk preferably comprises storing a new version of the map chunk. In preferred embodiments, in addition to storing the new version of the map chunk, the storage also retains a copy of the previous version of the map chunk. This then means that the previous version of the map chunk may still be available, if that is required. This also facilitates performing differential updates in which only the differences (deltas) compared to a previous version of a map chunk need to be transmitted, hence further reducing data consumption/bandwidth.

For instance, if the client application and/or cache system already has available a previous version of a map chunk, rather than sending the new version of the map chunk in full, the system preferably sends only the differences between the new version of the map chunk and the previous version of a map chunk that is already available.

Thus, in embodiments, when a request is subsequently received for the new version of the map chunk: difference data reflecting the differences (deltas) between the new version of the map chunk and the previous version of the map chunk is generated, and the difference data is then returned in response to the request. This therefore helps further reduce data consumption/bandwidth associated with transferring the digital map data to the device on which the client application is executing.

The above approach may also allow to effectively reduce the associated 'expiry time' for the map chunks that are stored (cached) locally to the client application. For instance, as mentioned above, each map chunk that is stored in the (map chunk) cache that is local to the device on which the client application is executing may have an associated expiry time, such that the map chunk is only replaced with a new map chunk (if one is available) if the respective expiry time has elapsed. However, in embodiments, the map chunk expiry time can be much shorter than could be the case for map tiles in more traditional arrangements, since map updates are localised to particular map chunks, and can be processed on the server very quickly. That is, a map update affecting only a small portion of the digital map would only need to be provided for client applications that are using that portion of the digital map. Further, the amount of data that needs to be transferred is significantly reduced compared to more traditional arrangements, such that it becomes more feasible to perform such updates with a greater frequency.

Thus, in preferred embodiments, the expiry time for map chunks that are stored (cached) locally to the device on which the client application is executing is set to less than 24 hours, and preferably it is set to less than 2 hours. In a preferred example, the expiry time for map chunks is set to 1 hour. It will be appreciated that this may be significantly shorter than the expiry time that may be used in other, more traditional map tiling approaches (which could be set to a matter of weeks).

According to preferred embodiments, therefore, the use of incremental map updates, in combination with the reduced data consumption and/or API cost associated with the map chunks, may also facilitate providing the client application with 'fresher' digital map data, at least compared to some other, more traditional map tiling approaches.

Embodiments may therefore provide various benefits compared to other possible approaches for managing digital map data. In particular, as explained above, embodiments may help to reduce data consumption/bandwidth associated with downloading digital map data via a server, and may also reduce the number of API requests that will be issued to the server (as well as the costs of managing these on the server). Embodiments may also provide benefits on the server side in terms of maintaining the digital map data and managing map updates more efficiently, which in turn can allow 'fresher' digital map data to be made available to client applications. This can further then improve the user experience for users of the client application.

Subject to any particular requirements of the technology described herein, the digital map may be any suitable and desired digital map.

Thus, the digital map may generally correspond to any suitable geographic area.

The digital map may also contain data relating to various different types of objects and features, e.g. depending on the purpose of the digital map.

For example, in preferred embodiments, the map-based application uses the digital map to provide a visualisation of part of the geographic area encompassed by the digital map. In that case, the digital map could be an image (or collection of images) representing the geographic area encompassed by the digital map.

However, the map-based application could also use the digital map for other purposes, e.g. for navigation/route-planning. In that case, rather than (or in addition to) storing images for visualising the geographic area encompassed by the digital map, the digital map should contain data defining the underlying road network and geometry, such as segments and nodes, as well as associated costs for the same, in a suitable format. Various arrangements would be possible in this regard and the technology described herein can generally be applied to any suitable and desired digital map.

Similarly, the map tiles and map chunks into which the overall digital map is subdivided may have any suitable and desired format.

The geographic area encompassed by the digital map may correspond to the entire world. In that case, the hierarchy of map tiles may include at the lowest zoom level (zoom level 0) a single tile that encompasses the entire world. At the next zoom level (zoom level 1), that single tile may be suitably subdivided, and so on, down to the highest zoom level.

In general, however, a given digital map need not encompass the entire world, and may only encompass a certain portion of the world (e.g. a country, a city, etc.), and various arrangements would be possible in this respect.

The subdivision of the digital map into the map tiles can also be done in any suitable and desired fashion. For example, preferably, at each level of the hierarchy (i.e. for each zoom level) beyond the lowest zoom level, the map tiles in the preceding level are subdivided into equal quadrants. Preferably, therefore, the map tiles are rectangles, e.g. squares. However, this is not strictly necessary and any suitable tiling pattern could in principle be used to define the map tiles.

Similarly, the hierarchy of map tiles could generally contain any suitable number of zoom levels. Thus, in one example, the hierarchy of map tiles has 23 zoom levels, but other examples would of course be possible.

The map tiles themselves may contain any suitable data, and may have any desired format, depending on the purpose of the digital map.

For example, in preferred embodiments, the digital map is subdivided into the map tiles for visualisation purposes. In that case, each map tile is effectively an image data file. The map tiles in that case may have any desired image format but preferably contain vector image format data, i.e. that is scalable across multiple zoom levels. For instance, the map tiles may use a suitable vector image format, such as SVG. Other arrangements would however be possible.

In embodiments, there may be multiple types of map tiles (each preferably having its own hierarchy). For example, there may a set of map tiles corresponding to the underlying or base digital map and another set of map tiles that represent optional information that can be overlaid onto the underlying or base digital map. Various arrangements possible in this regard and the map chunks may be used for any or all types of map tiles in such cases.

As mentioned above, each map tile preferably corresponds to an image of a section of the digital map. The map tile should therefore show relevant objects and features within that section of the digital map, for example representing the road network geometry within that section. Different map tiles at different zoom levels may thus show similar objects and features but at different levels of details.

In some embodiments, the map tiles may alternatively, or additionally, contain traffic data. In that case, the map updates may also include data indicative of current traffic conditions, and this can be represented appropriately within the map tiles, so that the map tiles also allow information pertaining to the current traffic conditions to be provided, and optionally displayed, by the map-based application. For example, in embodiments, there may be a first set of map tiles that represent the road network and a second set of map tiles that represent the traffic conditions within that road network, and these sets of map tiles can be overlaid to produce a compound display. The map chunking approach described above may generally be applied separately to both sets of map tiles. Alternatively, the map tiles (and map chunks) may themselves be compound map tiles including both the data representing the road network geometry and the traffic conditions. Various arrangements would be possible in this regard.

Whilst various embodiments are described with reference to visualisation, as mentioned already, it is not essential that the digital map is used for producing a visual display, and the digital map could be used for other purposes, such as navigation and/or route-planning. In that case, rather than the map tiles corresponding to images, they may have other suitable data formats, i.e. for storing the relevant object and feature data that will be needed by the navigation and/or route-planning application. For instance, some navigation and/or route-planning algorithms may use a hierarchical subdivision of the road network, as it is typically the case that the navigation and/or route-planning algorithm will only need to direct users along higher priority (e.g. main) roads, and so at least for longer routes, it may be appropriate to only consider such higher priority roads. Thus, the road network may be subdivided into a hierarchy of map tiles in which different levels of the hierarchy represent different zoom levels, with lower zoom levels containing data (only) for higher priority (e.g. main) roads, and higher zoom levels containing data for lower priority (e.g. minor) roads. The map chunking approach described herein may accordingly also be applied to this subdivision of the digital map.

Various options possible in this regard and again the technology described herein can generally be applied for any desired purpose, so long as there is some subdivision of the digital map into map tiles corresponding to different zoom levels (levels of details) such the map chunking approach described above can suitably be applied.

As discussed above, the map chunks correspond to respective portions of the digital map and contain data for generating multiple, different map tiles. Preferably, the map chunks have a similar form (and format) to the map tiles. For example, in preferred embodiments, a single map chunk corresponds, in shape/area, to a particular map tile at a particular zoom level. However, the map chunk will contain not only the data for that particular map tile at the particular zoom level, but will also contain data for generating map tiles at one or more higher zoom levels.

Thus, the map chunks are preferably rectangles, e.g., and preferably squares, and are preferably aligned with, and contain data for, an integer number of the map tiles into which the geographic area encompassed by the digital map has been subdivided.

The set of map chunks thus preferably together encompasses the same geographic area encompassed by the overall digital map, with each map chunk representing a respective, non-overlapping portion of that geographic area.

The map chunks are thus essentially portions of the bulk digital map. The overall bulk digital map is thus preferably only loaded once, when a set of map chunks are initially produced, and these are then stored on the server. Thus, in embodiments, a set of map chunks may be obtained, e.g. from the overall bulk digital map, and at least one version of each of these map chunks is then appropriately stored in the storage associated with the server. Subsequent processing of the digital map is preferably then performed for these map chunks, e.g. so that it is the map chunks that are preferably then transmitted and/or updated by the server, as described above.

In contrast, in more traditional systems, the bulk digital map may be stored in full on the server, with the individual map tiles being produced, on the server side, from the bulk digital map.

Preferably, the map chunks do not contain data for the map tiles at all zoom levels within the hierarchy of map tiles, but only a subset of zoom levels, e.g. those that are more frequently used. For instance, in some embodiments, a map chunk may contain data for the map tile at a particular zoom level and also for higher zoom levels. In other embodiments, a map chunk may contain data for a certain range of zoom levels. Various arrangements would be possible in this regard.

To give an example, in the case given above where the world is subdivided into 23 zoom levels for visualisation purposes, for driving applications, it is typically the case that zoom levels of between 14 to 18 are used for producing a display of the map. A map chunk may therefore correspond in area to a single map tile at a zoom level of 14 but may also contain the data for generating other map tiles within that area at higher zoom levels. For example, the map chunk could contain data for generating map tiles at zoom levels 15 to 18 (i.e. the most frequently used zoom levels), or even for generating all map tiles at zoom levels from 15 to 22 (i.e. up to the highest zoom level). In that case, (only) if a map tile is needed at a zoom level lower than 14, that particular individual map tile may be returned, e.g. as would normally be done when not using the map chunks as described herein.

Preferably the map chunks have the same data format as the map tiles, although this is not strictly necessary.

Thus, when the map tiles are image files, the map chunk is preferably also a similar image file. However, because a single map chunk contains data for generating map tiles at multiple, different zoom levels, the map chunk may not itself be suitable for display, i.e. as it will contain too much information to be meaningfully displayed.

The map chunk can however be processed to generate respective map tiles, e.g. in the desired format. Thus, in the preferred examples where the map tiles are vector images of respective sections of the map, the map chunk will contain the relevant data for generating these images. In this regard, the map chunk may contain various objects and features which are appropriately labelled to identify for which zoom levels those objects and features should be included into the rendered map tile. For example, the map chunk may contain an array of features containing a geometry representation that can be rendered, and respective features may be associated with respective metadata, e.g. tags, that indicate the (minimum) zoom level at which those features should be displayed. Thus, when a map tile is to be created at zoom level 15, if a given feature within the map chunk is indicated to have a minimum zoom level of 16, that feature does not need to be rendered for the map tile, and so this is avoided.

Various other examples would be possible.

### BRIEF DESCRIPTION OF THE DRAWINGS

Various embodiments will now be described, by way of example only, with reference to the accompanying drawings, in which:
Figure 1 shows schematically a map tiling approach in which the world is subdivided into a hierarchy of map tiles representing the world at different zoom levels;
Figure 2 shows schematically the map tiles that may be needed by an application for a particular geographic area;
Figure 3 shows schematically an extended tile data structure according to an embodiment;
Figure 4 shows schematically how the extended tile data structure corresponds to the map tiles shown in Figure 1;
Figure 5 shows schematically the extended tiles that may be needed by an application for a particular geographic area;
Figure 6 shows a comparison between the use of map tiles and extended tiles;
Figure 7 show schematically a data processing system that may be operated in accordance with embodiments;
Figure 8 is a flow chart illustrating the processing of digital map data according to a tile-based approach;
Figure 9 is a flow chart illustrating the processing of digital map data according to an embodiment; and
Figure 10 is a flow chart illustrating an incremental update process according to an embodiment.

### DETAILED DESCRIPTION

The present embodiments relate to digital maps and in particular to digital maps that are subdivided into a hierarchy of "map tiles" for use by map-based applications. There are various reasons why this might be done but one preferred example would be for visualization purposes, i.e. so that a renderer component of a map-based application can produce a display of the digital map.

For example, embodiments will now be described with reference to an implementation in which a digital map representation of the entire world is subdivided for visualization purposes into respective map tiles, with each map tiles corresponding to a square image of a respective part of the digital map. Other examples would however be possible and the present embodiments may generally be applied to any suitable hierarchy of map tiles.

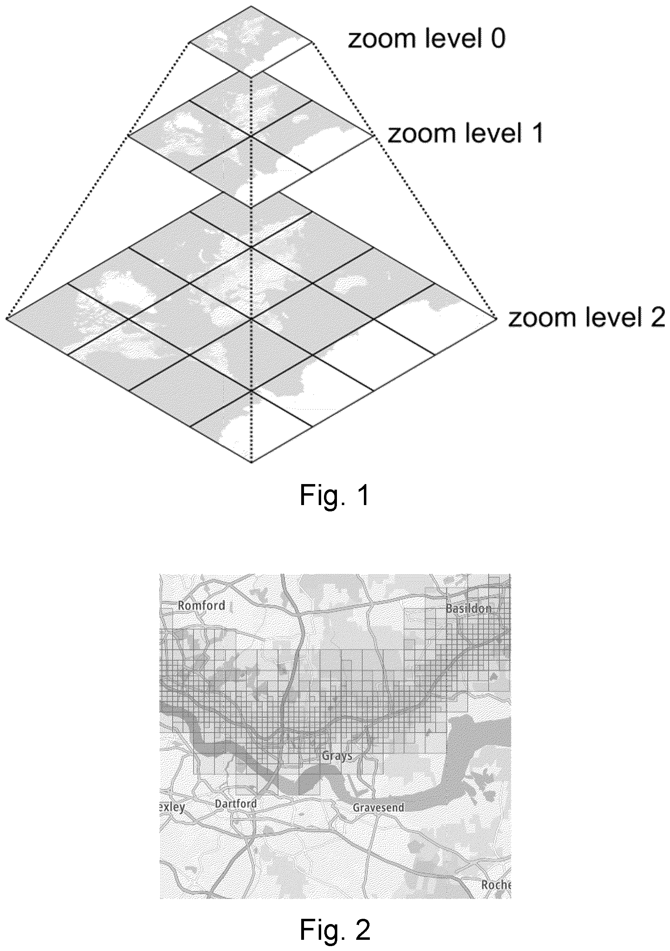

Figure 1 thus illustrates this map tiling concept in which the world is subdivided into map tiles at various zoom levels, with each zoom level containing different levels of detail. In particular, as shown in Figure 1, this is achieved by increasing the number of tiles at each subsequent zoom level. Thus, at zoom level 0, the entire world is represented by a single map tile. At zoom level 1, the world is then divided into four tiles, and so on, such that each subsequent zoom level has four times as many tiles as the previous one.

Lower zoom levels thus cover larger areas but provide less detail, while higher zoom levels cover smaller areas with greater detail. For instance, the implementation may support 23 zoom levels for map visualisation (from zoom level 0 to zoom level 22), resulting in approximately 17.6 trillion tiles at the highest zoom level.

This division of the digital map representation of the entire world into zoom levels with varying degrees of detail is used when producing a display of the digital map. For example, a map-based application that wishes to produce a display of part of the digital map will request, via the API, map tiles from different zoom levels to display the portion of the digital map that is currently within the camera frustum. For driving applications, the application will typically use a zoom level range of between 14 and 18 for displaying the digital map, with regions that are closer to the camera being displayed at higher levels of zoom and regions that are further from the camera being displayed at lower levels of zoom. This is illustrated in Figure 2 which shows the map tiles that may be used to produce a display of a particular geographic area.

Thus, a map-based application will issue requests for map tiles, via the API, and the map-based application will then combine the map tiles appropriately to render a display of the digital map. In this regard, it will be appreciated that each map tile may be uniquely identified by its zoom level and its {x,y} coordinates within the grid for that zoom level. Thus, the API request will typically specific a particular map tile that is to be returned. The API request may also, for example, specify any other suitable information such as a desired format for the tile (e.g. SVG), a display style (e.g. day/night), a layer (if the map tiles can be layered with other tiles), a tile size, a language for any text that is to be displayed, etc..

The API requests could be issued in an "on the fly" manner, as and when map tiles are required. Often, however, part of the map may be downloaded in advance, via a suitable prefetching mechanism, so that the map is then available for "offline" use. In this case especially, requests may be issued for many different map tiles that are all within the same general region of the map, but having different levels of detail.

This can then lead to various issues. For example, there may be relatively higher data consumption/bandwidth for downloading all of the required map tiles, which will have an associated cost for the user. There will also be an associated cost on the server side more managing these API requests, including implementing suitable rate limiting and authorisation policies. This can also therefore impact map 'freshness' as the frequency of map updates may have to be reduced in order to manage data consumption/bandwidth costs.

To address these issues, the present embodiments use a novel map "chunking" approach in which the digital map representation of the world is divided into a set of map "chunks" that are stored on the server.

According to the present embodiments, a map "chunk" is essentially a vector image format structure containing data defining the geometry to be rendered for a corresponding section of the digital map. However, rather than simply containing the data for producing an image of that section of the digital map at a particular single zoom level (i.e. as a corresponding map tile would do), a map chunk contains all of the data required for generating multiple map tiles at different zoom levels within its section of the digital map. A map chunk thus corresponds to a particular geographic subarea within the overall geographic area encompassed by the digital map, and so in this respect is similar to a map tile, but compared to a map tile, the map chunk is "extended" because it contains not only all of the data for that particular geographic subarea (i.e. for a single map tile) but also the information needed to generate higher zoom level tiles from it. A map chunk can thus be considered as an extended map tile data structure, and the map chunks will accordingly also be referred to as "extended tiles" in the description below.

The effect and benefit of using these extended tiles is thus in the ability to replace the zoom range of more frequently used higher-level tiles with extended tiles.

For instance, extended tiles may be downloaded to the device but are not immediately used by the renderer to produce the digital map display.

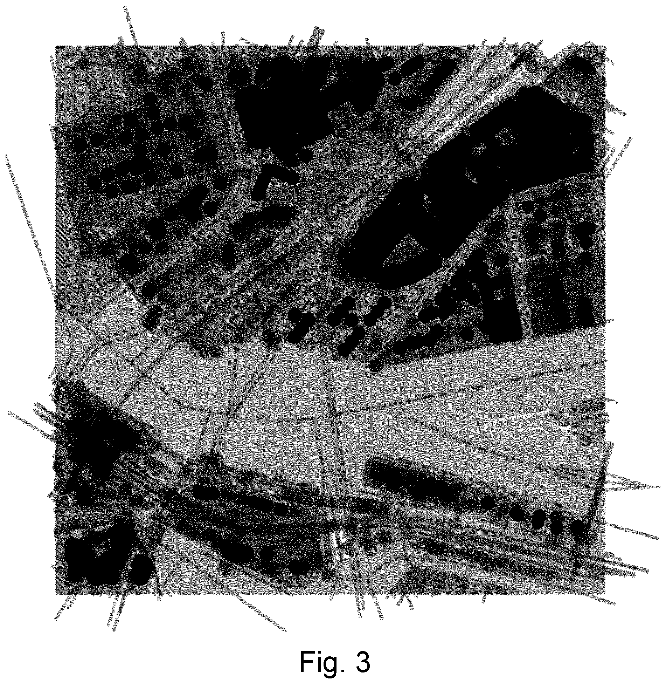

In this regard, as shown in Figure 3, which shows an example of a particular extended tile, it will be appreciated that the extended tiles are not suitable for direct display because they contain too much data, which would clutter the view. Additionally, the visualization style for a given map tile may generally vary depending on the map tile's zoom level, as data may be presented differently across different zoom levels (whereas extended tiles encompass a range of zoom levels).

Instead, when the renderer needs to display data, the extended tile is converted into the visualization map tiles that the renderer needs.

Thus, as shown in Figure 3, a single extended tile will contain data for producing multiple different map tiles at different levels of detail. In particular, the extended tile will contain an array of features containing a representation of geometry that is to be rendered, together with metadata, e.g. in the form of tags, associated with those features and that indicate the (minimum) zoom level at which those features should be displayed. Thus, when a map tile is to be created at zoom level 15, if a given feature within the map chunk is indicated to have a minimum zoom level of 16, that feature does not need to be rendered.

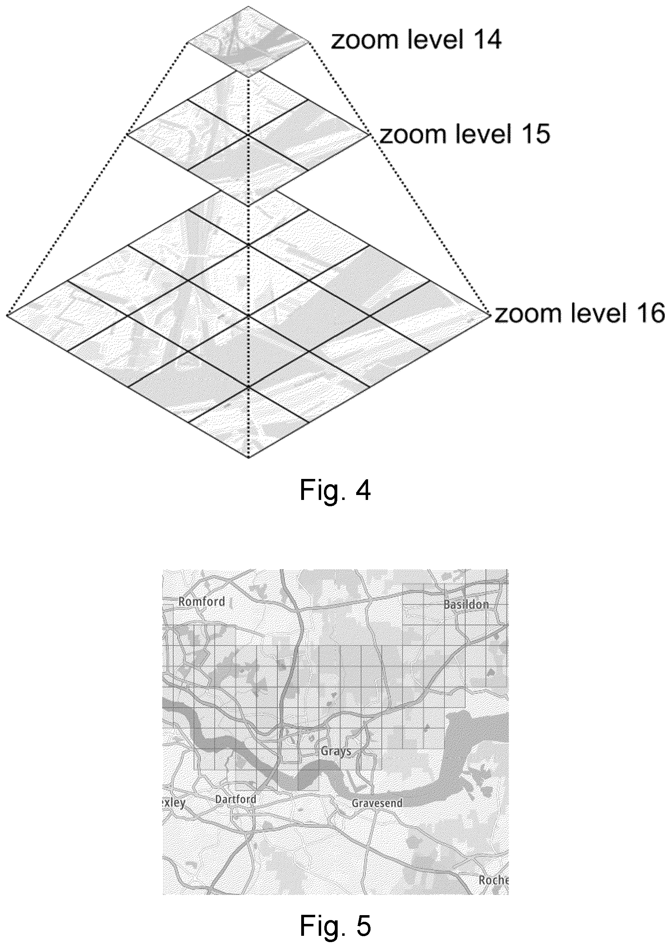

Figure 4 illustrates further details of this, and shows that the extended tile corresponding to a particular map tile at zoom level 14 contains all of the data for generating that particular map tile at zoom level 14 as well as data for generating the map tiles at one or more higher zoom levels. For instance, in embodiments, an extended tile may contain data for the particular map tile at zoom level 14 and for all higher zoom levels up to the maximum zoom level available in the API.

(For lower zoom levels (i.e. zoom levels from 0 to 13), regular map tiles may therefore be used, in the normal manner for map tiling.)

In this regard, zoom level 14 works well for visualising map data for driving purposes, as zoom levels between 14 and 18 are typically used. However, the actual zoom levels covered by an extended tile may generally vary based on data density. For example, when visualising traffic data, different zoom levels may more commonly be used (and there may also be a different subdivision of the world into zoom levels), and so an extended tile for visualising traffic data may contain data for different zoom levels. Other examples would of course be possible.

It will also be appreciated here that the format of an extended tile could in general differ from that of a visualization map tile. However, from a practical standpoint, it is more convenient to maintain the same format for both, and so this is preferably done.

Figure 5 then shows the same region depicted in Figure 2 divided into extended tiles. It will be appreciated that a smaller number of extended tiles are required to tile the region compared to the visualisation map tiles shown in Figure 2.

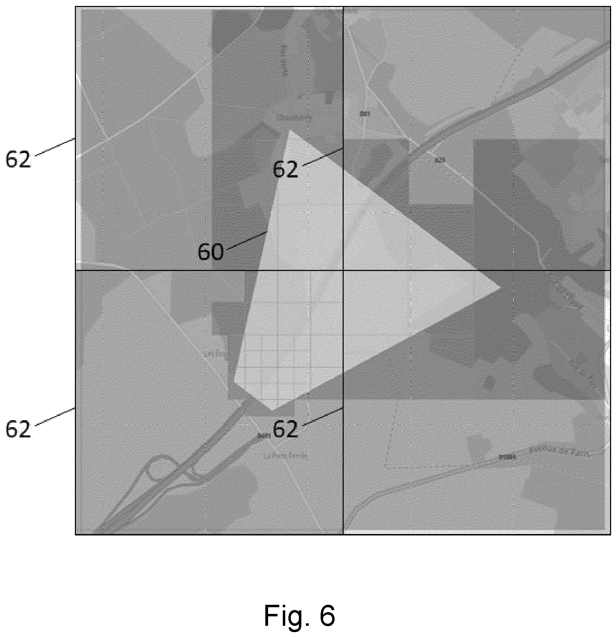

Figure 6 illustrates the improvements that can be achieved using the extended tiles (i.e. map chunks) described herein.

As illustrated in Figure 6, the map-based application will need to download many different visualisation map tiles as the user moves through a particular area. Further, these map tiles often contain a significant amount of overlapping data. This overlap is a result of the movement of the view frustum 60 as the user moves through the area. For instance, lower-level tiles are downloaded so as to display the horizon, as shown in the top right of Figure 6, whereas more detailed tiles are fetched in the region closer to the user. Initially, therefore, a lower-level tile may be fetched for a particular area, and as the user moves towards that area, more detailed tiles will be fetched to show additional details. These map tiles will therefore contain similar and overlapping data, as they will show the same objects and features, but at different levels of detail.

It will be appreciated from Figure 6 that many visualisation map tiles will therefore be needed, particularly as the user moves through the area. On the other hand, the entire area shown in Figure 6 can be covered by only four extended tiles 62, and these extended tiles 62 may contain the data required to generate all of the map tiles that are required to produce the display.

Transferring all of that data using extended tiles therefore significantly reduces the amount of duplicated data that would otherwise be sent multiple times across different zoom levels. To give an example, prefetching all of the visualisation map tiles used for driving within a 30 km radius around the center of Paris may require 378 MB of data. In contrast, the same area can be covered by extended tiles with only 129 MB of data.

The results for downloading only the map tiles required during driving are less impressive because extended tiles cover a larger area, leading to some over fetching of data. For example, in Figure 6, it will be appreciated that the area of the map tiles required by the renderer is smaller than the area represented by the corresponding extended tiles. Despite this over fetching, there is still significant reduction in data consumption in this situation (e.g. up to 25%). Furthermore, the over fetched regions are likely to be re-used, for other routes, and so if these extended tiles are cached, this should further reduced data consumption/bandwidth.

Thus, whilst the map tiling approach described above in relation to Figures 1 and 2 may be effective for rendering and visualizing data, it is not optimal for transferring and storing that data, whereas the use of the extended tiles (i.e. map chunks) according to the present embodiments may thus provide various improvements in this regard. For instance, from internal testing, it has been found that the number of API requests can typically be reduced by up to a factor of eight. This therefore significant reduces API management costs, as fewer requests need to be processed through the system, and also decreases data consumption/bandwidth, as each request incurs overhead.

The above discussion so far focusses on benefits in terms of reducing data consumption/bandwidth when transferring the map (tile) data. The extended tiles are however an integral part of the server-side architecture and enable further optimisations and improvements in this regard. In particular, the extended tiles can replace the standard `bulk' map that may otherwise be used, such that the entire digital map is instead stored as a set of extended tiles that are utilised by the servers.

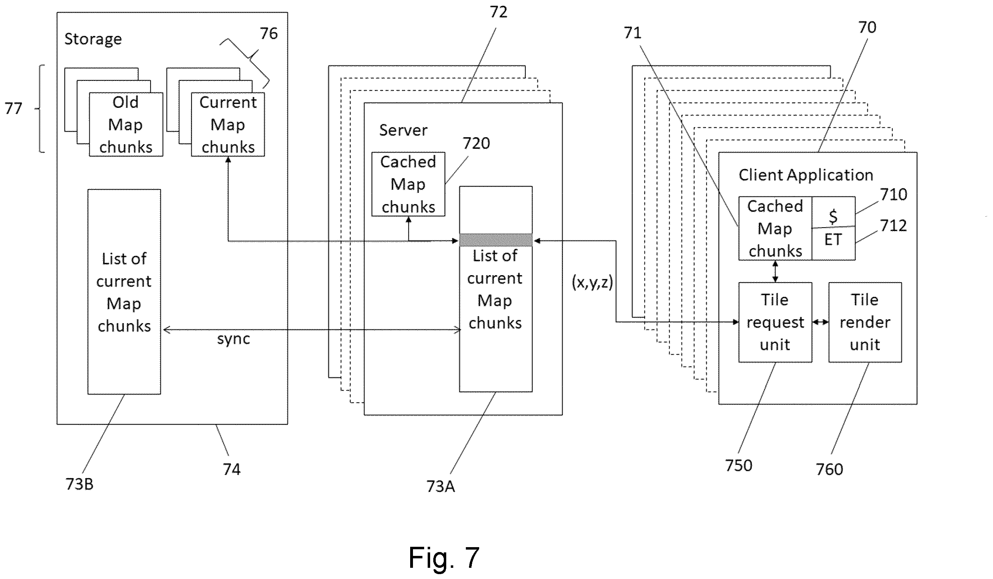

Figure 7 illustrates an overall map data processing system that may be operated in accordance with embodiments. In this example, the map data processing system includes storage 74 on which the underlying digital map data resides. The map data processing system also includes a plurality of client applications, associated with different respective end users/devices, that may need to access the digital map data. For instance, as shown in Figure 7, a given client application 70 may include a respective tile render unit (i.e. renderer component) 760 that uses the map tiles to produce a display of the geographic area encompassed by the digital map. The client application 70 also includes a tile request unit 750 that that is operable to issue API requests for the relevant digital map data via an appropriate map tile endpoint. The client application 70 also implements a software cache 71 for storing data for map tiles locally on the device. In particular, the cache 71 is operable to store the map chunks, i.e. extended tiles, of the present embodiments. As shown in Figure 7, the cache 71 also stores, in association with each cached map chunk, a respective expiry time 712 for that map chunk and a respective checksum 710 identifying the data contained with the map chunk.

In the map data processing system shown in Figure 7, a client application 70 is operable to issue such API requests to a respective tile server 72 that provides an interface to the storage 74. As shown in Figure 7, the map data processing system may generally comprise a plurality of tile servers 72, that each access the same storage 74, and each tile server 72 is in turn operable to communicate with a plurality of client applications 70. As shown in Figure 7, each tile server 72 may also comprise a respective cache 720 for storing some of the map chunks, i.e. extended tiles, locally to the tile servers 72 (although this is not essential).

The cache system that is implemented on the client application 70 and/or tile servers 72 thus allows some map chunks to be stored more locally to the client application 70 thus saving having to always fetch map chunks from the storage 74. The cache system may for example operate a least recently used, or other suitable, cache eviction policy, to try to ensure the most relevant data remains in the cache. For example, many users will tend to spend most of their time travelling within the same geographic area, and so caching can be effective in this regard.

As shown in Figure 7, the tile server 72 maintains a copy of a respective list of currently available map chunks 73A. The list of currently available map chunks 73A is essentially a set of map chunk identifiers, preferably in the form of checksums that are calculated over the data contained within the respective map chunks, that identify the current set of map chunks 76 that are available within the storage 74. Thus, when a client application 70 is requesting a tile, the tile request unit 750 may first send the checksum 710 that is stored for that map chunk to the tile server 72, and this is then compared with the checksum stored for the corresponding map chunk in the list of currently available map chunks 73A. If the checksums match, this means that the client application 70 already has the latest version of the map chunk available, and so this can be signaled appropriately to the tile request unit 750. The map chunk within the cache 71 is then used to produce the desired map tile. On the other hand, if the checksums do not match, this means that a newer version of the map chunk is available within the storage 74, and so this can be returned appropriately to the tile request unit 750.

As will be explained further below, a corresponding master version list of currently available map chunks 73B is maintained within the storage 74, and the list of currently available map chunks 73A maintained by the tile server 72 is synchronized with this master version. This then means that the tile servers 72 have up to date knowledge of which map chunks are currently available within the storage 74.

The tile request unit 750 of the client application 70 can thus issue, via its cache 71, requests for map tiles to the tile server 72. In response to this, as will be explained further below, if there is a newer version of the corresponding map chunk, i.e. "extended tile", containing the necessary data to produce the requested map tile, the tile server 72 preferably then returns the map chunk appropriately to the tile request unit 750 of the client application 70. For instance, as shown in Figure 7, the tile server can look up to relevant map chunks in its respective list of currently available map chunks 73A and identify where they are stored. The relevant map chunks can then be obtained and returned appropriately to the client application 70. When a map chunk is returned, it is thus added to the local cache 71 associated with the client application 70 and the client application 70 is then able to process the map chunk within the cache 71 to provide the tile render unit (renderer) 760 with the map tiles it needs to produce the map display.

This can provide various benefits. In particular, removing the bulk map storage can significantly reduce the runtime server costs, as the minimum memory requirements for the tile server 72 decrease substantially. For instance, as shown in Figure 7, the tile server 72 potentially only needs to keep the list of current map chunks 73A in memory, which list 73A identifies the latest versions of each of the extended tiles that are available in storage 74. As shown in Figure 7, the tile server 72 may also cache at least some map chunks, but this is not strictly necessary.

This approach also greatly enhances how the digital map can be updated. For instance, as shown in Figure 7, and as mentioned above, the tile server 72 is also operable to communicate with storage 74 within which a master version of the list of currently available map chunks 73B resides. The list of currently available map chunks 73B on the storage can thus be kept up to date, as and when the map chunks 76 that are stored and validated within the storage 74 are updated. For instance, the map chunks 76 within the storage can be updated by an external map build system (not shown). The master version of the list of currently available map chunks 73B in the storage 74 is thus kept up to date, and whenever an update is processed, this can then be signalled to the tile server 72 to synchronise the version of the list of currently available map chunks 73A at the tile server 72 with the master version in storage.

For instance, when the map build system issues a map update, this map update will cause one or more new map chunks to be written into the current map chunk storage 76. At the same time, the previous versions of any map chunks that are affected by the map update are copied into the old map chunk storage 77, so that they remain available within the storage 74. That is, when the map build system updates part of the map, it does not simply replace any affected map chunks in storage 74, and discard the previous versions of those map chunks, but instead writes a new version of the map chunk into the current map chunk storage 76, and moves the previous version of the map chunk to the old map chunk storage 77, thus still allowing access to the old version if the correct version ID is provided. Once a map update has been processed in this way, the master version of the list of currently available map chunks 73B within the storage 74 is updated to reflect the latest map update. Once this has been done, the updated the list of currently available map chunks 73B can then be broadcast to the tile servers 72 to update the respective versions of the list of the currently available map chunks 73A that are maintained by the tiler servers 72..

As a result, once a new map chunk, i.e. extended tile, is added to the current map chunk storage 76 following a map update, the lists of currently available map chunks 73B, 73A can be quickly updated, so that the new map chunk effectively becomes available to the tile server 72 within seconds, as it is simply necessary to send the information to update the current extended tiles map 73A to the tile server 72, rather than having to send any of the actual underlying map data at this point. Furthermore, since the map is no longer stored as a bulk entity, extended tiles can be updated incrementally during runtime, eliminating the need for bulk map updates. This streamlined system therefore not only lowers costs but also allows for incremental map updates, which allows for delivering the freshest map data to customers.

This also enables binary map updates on the client side. For instance, when the client application 70 requests an updated map chunk, i.e. extended tile, it sends the map chunk coordinates to the tile server 72 along with the version ID. The tile server 72 then uses its list of current map chunks 73A to determine whether the storage 74 has a newer version of that map chunk, and if so, both the newer and older versions of the map chunk are downloaded, and a binary difference (diff) is created which is what is ultimately sent to the client application 70. The client application 70 then applies this 'diff' to the version of the map chunk stored in its cache 71 to generate the requested new version of the map chunk. This can then reduce data consumption for updating map chunks to just 10% of the full map chunk, i.e. extended tile, size.

All these optimizations together facilitate improved end-to-end incremental updates of tiles. For instance, the lower data consumption and reduced number of requests required by the system allow for more frequent checks on whether updated data is available. This then allows the expiry time 712 for map chunks, i.e. extended tiles, to be reduced to as little as 1 hour (i.e. the minimum time needed to prevent overloading the server with requests), so that the system is able to provide updated map tiles whenever the renderer needs them, except in cases where the map tile is reused before the 1 hour expiry time has elapsed. This approach enables the display of the most up-to-date content with minimal delays. For example, when a car is commuting from point A to point B, it downloads all the necessary map chunks to produce the desired map tiles. As the map build system updates the map chunks for the next desired map tiles, the updated map chunks become available in storage 74 and are accessible on the tile server 72 within seconds. If the driver decides to return from B to A, and the return trip occurs after 1 hour, all map tiles will have been updated , allowing for validation of the tiles downloaded during the initial trip. As a result, for all trips utilizing tiles more than an hour old, we can display the freshest content possible. The worst-case scenario is having a tile that is only 1 hour old.

The use of the map chunks, i.e. extended tiles, described above can therefore provide various benefits compared to other, more traditional map tiling approaches.

For example, "extended tiles" are more compact and exhibit less duplication than standard tiles, allowing more tiles to fit in the same cache size. This increases the cache hit ratio and indirectly reduces data consumption. Additionally, the reduction in duplication directly lowers data consumption by avoiding repeated downloads of the same data.

While extended tiles cover a larger area than standard tiles, which can initially increase data consumption, this is offset by the significant reduction in duplication. The larger area enhances the likelihood of reusing the same tile for different routes, further decreasing overall data consumption.

Fewer requests also result in lower API management costs, which is particularly significant for traffic data. For instance, whilst embodiments are described above in relation to visualising the underlying digital map, the technology described herein is equally applicable to visualising traffic incidents, for example, which may then be overlaid on the digital map. Since traffic conditions change rapidly, caching does not effectively reduce the number of requests. For traffic incidents, the use of extended tiles can reduce the number of requests by five times. This also improves the efficiency of prefetching tiles to the device, allowing for faster data retrieval.

By utilizing extended tiles on the server side, it is also possible to significantly lower server operating costs. Previously, maps were stored as blobs, requiring all data to be loaded together to function properly. When a tile was requested, the server had to build the tile from the entire map, demanding substantial memory to maintain acceptable latency. Now, with the map stored as extended tiles, the server can download the requested tile, filter the necessary data, and return it efficiently. This transition enables the use of much smaller and more cost-effective servers.

Further, incremental map updates can now be applied, allowing data to be delivered from the server to the device within seconds in most cases. This is considerably more efficient than the previous mechanism, which updated maps only every few weeks.

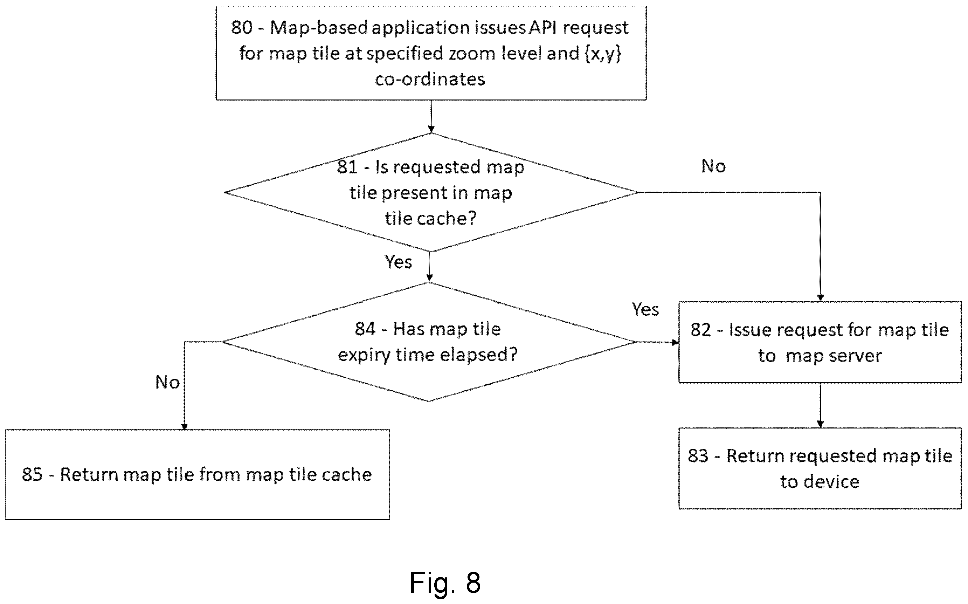

Figure 8 thus illustrates a more traditional approach for accessing map tiles. In this approach, a map-based application will issue, via an appropriate endpoint, an API request for a map tile at a specified zoom level and set of {x,y} coordinates with the tile grid for that zoom level (step 80). In response to this, it is then checked whether the requested map tile is present in a map tile cache (step 81).

If not, a request is then issued for that map tile to the server (step 82), and the requested map tile is returned accordingly to the device on which the map-based application is being executed (step 83).

If the requested map tile is already present in the map tile cache, it is checked whether the map tile expiry time has elapsed (step 84). If no, the requested map tile is returned from its location in the map tile cache (step 85). Otherwise, if the map tile expiry time has elapsed (step 84 - yes), a request is then issued for that map tile to the server (step 82), and the requested map tile is returned accordingly to the device on which the map-based application is being executed (step 83).

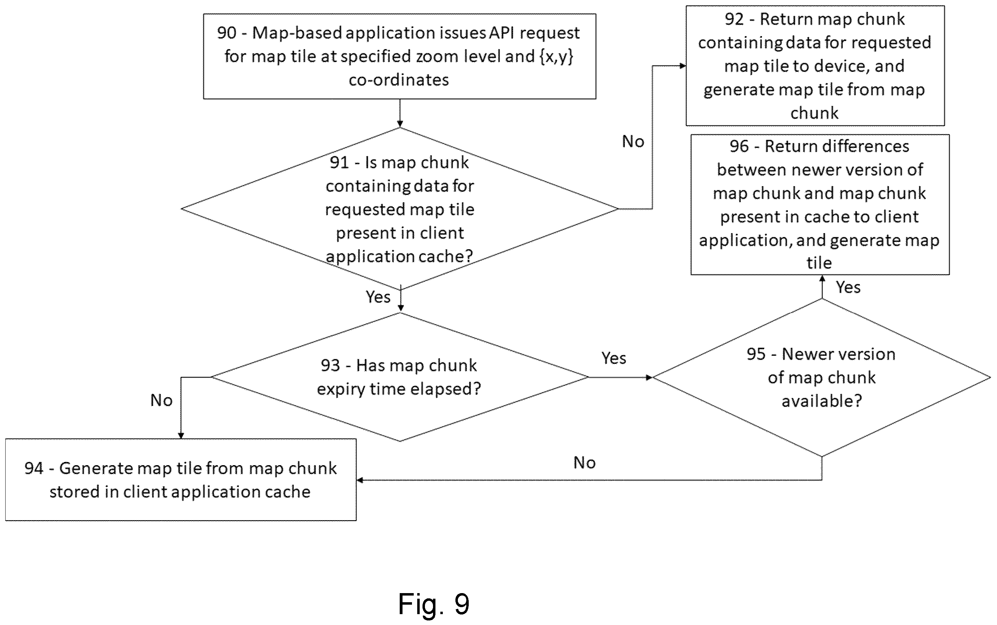

Figure 9 illustrates an improved approach utilizing the map chunks, i.e. extended tiles of the present embodiments. In this approach, the map-based application will again issue, via the appropriate endpoint, an API request for a map tile at a specified zoom level and set of {x,y} coordinates with the tile grid for that zoom level (step 90), e.g. in the same manner above. In Figure 9, however, it is then checked whether a map chunk containing the data required to generate the requested map tile is already present in the cache 71 locally to the device on which the map-based application is executing (step 91).

Thus, if the relevant map chunk is not available in the map chunk cache 71 (step 91 - no), a suitable request is issued to the tile server 72 to return the map chunk, i.e. extended tile, containing the data for the requested map tile to the client application 70 (step 92). The map chunk can then be fetched from its location in storage 74 (or within a cache 720 on the tile server 72, if available) and returned to the client application 70 and added to the map chunk cache 71. The map chunk can then be used to generate and render the requested map tile, as discussed above.

On the other hand, if the relevant map chunk is already available in the map chunk cache 71 locally to the device on which the map-based application is executing (step 91 - yes), it is first checked whether the map chunk expiry time 712 has elapsed (step 93). If not, the requested map tile is then generated accordingly from the version of the map chunk that is present in the map chunk cache 71 (step 94). Whereas, if the map chunk expiry time has elapsed (step 93 - yes), it is checked whether a newer version of the map chunk is available within the storage 74 (step 95).

This check is preferably done using by comparing the relevant map chunk identifier, i.e. checksum 710, associated with the map chunk that is present in the map chunk cache 71 with the corresponding map chunk identifier, i.e. checksum, for that map chunk that is present in the list of currently available map chunks 73A maintained on the tile server 72. Thus, as discussed above, if the map chunk identifiers are the same, this indicates that the map chunk that is present in the map chunk cache 71 is the latest available version of that map chunk. In that case, there is no need to re-download the map chunk, as the requested map tile can then be, and is, generated accordingly from the version of the map chunk that is present in the map chunk cache 71 (i.e. as in step 94). This can thus be signaled to the tile request unit 750 accordingly to cause this to happen.

Whereas, if it is determined from the comparison of the map chunk identifiers that there is a newer version of the map chunk available within the storage 74 (step 95 - yes), the differences between the newer version of the map chunk and the map chunk that is present in the map chunk cache 71 are returned to the client application 70 to allow the cache 71 to build the new version of the map chunk, and the map tile is then generated accordingly from the new version of the map chunk (step 96), once this is done.

Thus, when the tile render unit (renderer) 760 requires a map tile, first the map chunk cache 71 is checked for a map chunk that encompasses the needed data. The cache 71 can then convert this map chunk into the specific map tile format required by the tile render unit (renderer) 760. This approach therefore allows the client application to download fewer extended tiles (which serve as map chunks) instead of transferring numerous small individual map tiles, optimizing both data transfer and storage.

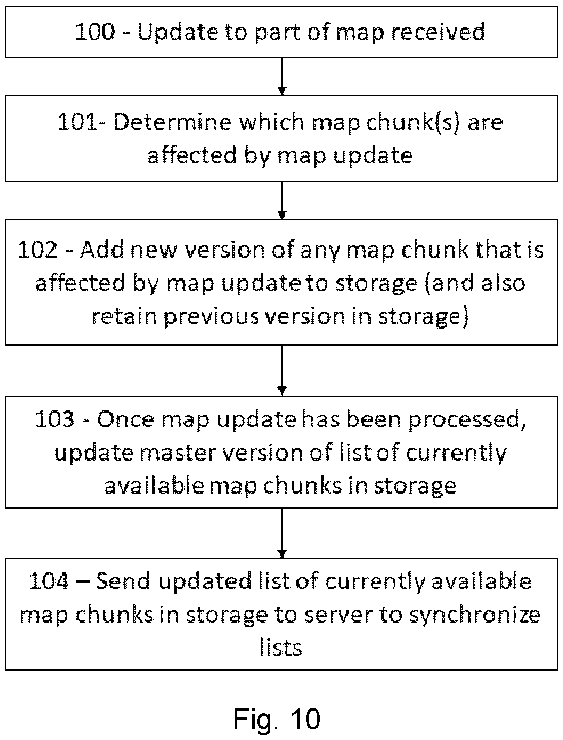

Figure 10 shows a corresponding operation when processing a map update to update part of the digital map. In particular, when an update to part of the digital map is received (step 100), it is determined which map chunk(s) are affected by the map update (step 101). For any map chunk(s) that are affected by the map update, a new version of the map chunk is produced and stored within the portion of the storage 74 that is used for storing the current map chunks 76 (step 102). At the same time, any previous version of the map chunk is then moved to the portion of the storage 74 that is used for storing the old map chunks 77.

Once a map update has been processed in full, such that new versions of all of the affected map chunks are stored (in step 102) appropriately, the master version of the list of currently available map chunks 73B that is maintained within the storage 74 can be updated accordingly, e.g. by calculating new checksums for the new map chunks. That is, once the map update has been processed in full, the master version of the list of currently available map chunks 73B is updated accordingly to reflect the updates to any and all map chunks(s) that are affected by the map update. The updated version of the list of currently available map chunks 73B is then sent from the storage 74 to the tile servers 72 to allow the respective versions of the lists of currently available map chunks 73A that are maintained by the respective tile servers 72 to also be updated. In this way, the respective lists of currently available map chunks 73A, 73B are synchronized with each other. At this point, the tile server 72 thus has knowledge of the current map chunks 76 available within the storage 74. It will be appreciated that the map update can therefore be signaled to the tile server 72 very quickly, as it is only required to synchronize the respective lists of currently available map chunks 73A, 73B, i.e. by sending new checksums as appropriate, and this can be done quickly/cheaply.

Various other arrangements would be possible.

For instance, whilst various embodiments are described above in relation to map visualisation, it will be appreciated that the technology described herein may generally applied to any suitable form of digital map, and therefore any suitable subdivision of such digital map into respective map tiles, depending on the particular purpose the digital map is to be used for.

The foregoing detailed description has been presented for the purposes of illustration and description. It is not intended to be exhaustive or to limit to the precise form disclosed. Many modifications and variations are possible in the light of the above teaching. The described embodiments were chosen in order to best explain the principles of the technology described herein and its practical applications, to thereby enable others skilled in the art to best utilise the technology described herein, in various embodiments and with various modifications as are suited to the particular use contemplated. It is intended that the scope be defined by the claims appended hereto.

## Claims

1. A method of operating a server system, wherein the server system manages data for an digital map, and includes a server that is operable to provide such data for the digital map to one or more client applications,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the digital map containing different levels of detail, and
wherein there is stored, in respective storage associated with or accessible by the server, a set of map "chunks", each map chunk corresponding to a respective portion of the digital map, and each map chunk containing data for generating a plurality of different map tiles at multiple, different zoom levels within its corresponding portion of the digital map,
the method comprising:
when data for a map tile at a particular zoom level that is contained within a respective map chunk is to be provided to a client application:
obtaining the respective map chunk containing the data for generating the requested map tile; and
using the obtained map chunk to provide data for the requested map tile to the client application.

2. The method of claim 1, further comprising:
when a map update to update part of the digital map is received:
determining which of the map chunk(s) in the set of map chunks stored within the storage correspond to the part of the digital map that is affected by the map update, to thereby determine which map chunk(s) need to be updated based on the map update; and
for any map chunk for which it is determined that the map chunk needs to be updated based on the map update, storing within the storage an updated map chunk including updated data based on the map update.

3. The method of claim 2, wherein the server maintains a set of map chunk identifiers for identifying a corresponding set of map chunks stored within the storage that are currently available for use, and wherein when a map update to update part of the digital map is received that causes one or more updated map chunks to be stored within the storage, the method comprises sending an updated set of map chunk identifiers to the server.

4. The method of claim 3, wherein the map chunk identifiers comprise respective hashes or checksums that are computed based on the data within the corresponding map chunks.

5. The method of claim 2, 3 or 4, wherein storing the updated map chunk comprises storing a new version of the map chunk, and wherein in addition to storing the new version of the map chunk, a copy of the previous version of the map chunk is also retained within the storage.

6. The method of claim 5, further comprising: when the new version of the map chunk is to be fetched from the storage: difference data reflecting the differences between the new version of the map chunk and the previous version of the map chunk is generated, and the difference data is returned.

7. A server system that manages data for a digital map, and that includes a server that is operable to provide such data for the digital map to one or more client applications,
wherein the digital map encompasses a certain geographic area, and wherein the digital map is subdivided into a hierarchy of map tiles in which different levels of the hierarchy represent different zoom levels, such that map tiles within different levels of the hierarchy correspond to different-sized sections of the geographic area encompassed by the digital map containing different levels of detail, and
wherein there is stored in respective storage that is associated with or accessible by the server, a set of map "chunks", each map chunk corresponding to a respective portion of the digital map, and each map chunk containing data for generating a plurality of different map tiles at multiple, different zoom levels within its corresponding portion of the digital map,
wherein when data for a map tile at a particular zoom level that is contained within a respective map chunk is to be provided to a client application, the map data processing system is operable and configured to obtain the respective map chunk containing the data for generating the requested map tile and to use the obtained map chunk to provide data for the requested map tile to the client application.

8. The server system of claim 7, further comprising map update handling logic that is operable and configured to:
when a map update to update part of the digital map is received:
determine which of the map chunk(s) in the set of plural map chunks stored within the storage correspond to the part of the digital map that is affected by the map update, to thereby determine which map chunk(s) need to be updated based on the map update; and
for any map chunk for which it is determined that the map chunk needs to be updated based on the map update, store within the storage an updated map chunk including updated data based on the map update.

9. The server system of claim 8, wherein the server maintains a set of map chunk identifiers for identifying a corresponding set of map chunks stored within the storage that are currently available for use, and wherein when a map update to update part of the digital map is received that causes one or more updated map chunks to be stored within the storage, the map update handling logic is configured to send an updated set of map chunk identifiers to the server.

10. The server system of claim 9, wherein the map chunk identifiers comprise respective hashes or checksums that are computed based on the data within the corresponding map chunks.

11. The server system of claim 8, 9 or 10, wherein the map update handling logic when storing an updated map chunk is configured to store a new version of the map chunk, and wherein in addition to storing the new version of the map chunk, the storage is configured to retain a copy of the previous version of the map chunk.

12. The server system of claim 11, further comprising request handling logic that is operable and configured to: when a request is received for the new version of the map chunk: generate difference data reflecting the differences between the new version of the map chunk and the previous version of the map chunk, and return the difference data in response to the request.

13. The method of any of claims 1 to 6, or the server system of any of claims 7 to 12, wherein in response to the server receiving from a client application a request for a map tile at a particular zoom level for which data is contained within a respective map chunk, the server obtains the respective map chunk containing the data for the requested map tile, the server generates the requested map tile at the particular zoom level from the obtained map chunk, and the server then returns the generated map tile to the client application.

14. The method of any of claims 1 to 6, or the server system of any of claims 7 to 12, wherein in response to the server receiving from a client application a request for a map tile at a particular zoom level for which data is contained within a respective map chunk, the server obtains the respective map chunk containing the data for the requested map tile and then returns the map chunk containing the data for the requested map tile to the client application.

15. A computer program product, or software, comprising instructions which, when executed on one or more processor, will cause the one or more processor to perform a method as claimed in any of claims 1 to 6.
